# EUROPEAN PATENT SPECIFICATION

(11) **EP 2 233 201 B1**
(45) Date of publication and mention of the grant of the patent: **23.05.2012**
(21) Application number: 10380031.4
(22) Date of filing: 08.03.2010
(51) Int. Cl.: B01F 15/04, B65B 1/08, B65B 1/12, B65G 47/19

(54) **Mixing-metering device for two morphologically different flowable products, applicable to a packaging machine**
Für Verpackungsmaschine verwendbare Misch-Mess-Vorrichtung für zwei morphologisch unterschiedliche fließfähige Produkte
Dispositif de mélange/mesure pour deux produits fluides morphologiquement différents, applicable à une machine d'emballage

(30) Priority: 23.03.2009 ES 200900778
(43) Date of publication of application: 29.09.2010
(73) Proprietor: Mespack, S.L., 08130 Santa Perpètua de Mogoda (Barcelona) (ES)
(72) Inventor: Marti Roche, Enric, 08130 Santa Perpètua de Mogoda (Barcelona) (ES); Fite Sala, Menna, 08130 Santa Perpètua de Mogoda (Barcelona) (ES); Mora Flores, Francisco, 08130 Santa Perpètua de Mogoda (Barcelona) (ES)
(74) Representative: Gislon, Gabriele

(56) References cited:
- EP-A1- 1 661 810
- GB-A- 190 910 556
- US-A- 5 964 146

## Description

### Field of the Art

The present invention relates to a mixing-metering device for mixing-metering two morphologically different flowable products, generally applicable to a packaging machine and more particularly to a container forming and vertical packaging machine.

### Background of the Invention

A mixing device is known e.g. from GB10556 A A.D. 1909, which however is not applicable to a vertical packaging machine. A type of metering device known, for example, by patent JP-A-2008037468, comprises a vertical conduit in which a worm screw is installed, in which said vertical conduit has an upper inlet in communication with the lower outlet of a hopper in which the powder product to be metered is loaded and a lower outlet arranged above the inlet of a vertical filling conduit. An intermittently and suitably regulated operation of the worm screw provides successive metered amounts of the powder product into the filling conduit. Container forming and vertical packaging machines equipped with a metering device of the described type and provided with means for forming a container around said filling conduit from a band of sheet material, such that successive containers are formed, filled, sealed and cut in a continuous process, are known. Container forming and vertical packaging machines provided with means for successively forming containers with two separate compartments and a double metering device for metering two morphologically different flowable products into said two compartments of the containers are also known.

### Disclosure of the Invention

The objective of the present invention is to provide a mixing-metering device capable of metering two morphologically different flowable products, such as a powder product and a granulated product, simultaneously or consecutively into one and the same container, the mixing-metering device generally being applicable to a packaging machine and more particularly to a container forming and vertical packaging machine.

The present invention contributes to achieving the previous and other objectives providing a mixing-metering device for mixing-metering two morphologically different flowable products, applicable to a packaging machine, of the type comprising a first metering device for a first product and a second metering device for a second product. The mentioned first metering device includes a metering conduit which has an inlet at an upper end in communication with a hopper containing the first product and an outlet at a lower end in communication with an outlet conduit, and a worm screw installed inside said metering conduit and intermittently operated to introduce consecutive metered amounts of said first product into said outlet conduit at a predetermined frequency. The mentioned second metering device comprises a vibrating channel arranged to convey said second product and pour it into a receiving conduit at a predetermined flow rate, a retainer intermittently operated to temporarily retain the flow of second product inside said receiving conduit forming successive metered amounts, and to let said metered amounts fall into a drop conduit at the predetermined frequency, and a transfer element provided with a transfer chamber with an inlet arranged to receive the metered amounts of the second product from said drop conduit, an outlet in communication with the outlet conduit and a pusher intermittently operated by a pneumatic cylinder, for example, to transfer the successive metered amounts of the second product from said transfer chamber to the outlet conduit through said outlet of the transfer chamber at the predetermined frequency.

The outlet conduit and the metering conduit in which said worm screw is installed are preferably arranged in a vertical position and mutually aligned, whereas the transfer chamber in which said pusher moves is arranged in a horizontal position. The outlet of the transfer chamber is laterally communicated with the outlet conduit below the outlet of the metering conduit. The first metering device is generally configured to meter the first product in a powder form and said second metering device is configured to meter the second product in a granulate form. When the mixing-metering device of the present invention is applied to a container forming and vertical packaging machine, the outlet conduit is in communication with an also vertical filling conduit around which the container is formed, and generally, for filling each container first the pusher is operated to introduce a metered amount of the second granulated product and then the worm screw is operated to introduce a metered amount of the first powder product on the metered amount of the second granulated product. Nevertheless the consecutive operating order of the pusher and the worm screw can be reversed or they can even be simultaneously operated at least in part to mix the first and second products in the outlet conduit.

In the container forming and vertical packaging machine, the containers are formed from a band of sheet material that is folded and stitched by heat-welding. Once filled, the container is sealed by heat-welding and cut to separate it from the band. To prevent residual powder discharge from the outlet of the metering conduit into the outlet conduit and onto areas of the band or of the container where heat-welds must be performed from occurring between two consecutive metering operations of the first product, which could negatively affect the sealing of the container, there is arranged at the outlet of the metering conduit a perforated plate which allows the passage of the first powder product when the worm screw is being operated and which is nevertheless capable of retaining the first powder product when the worm screw is stopped. There is also a risk that residual granules may fall from the outlet of the transfer chamber into the outlet conduit between two consecutive metering cycles of the second granulated product, which can negatively affect the sealing of the container. To avoid this, a gate is arranged adjacent to the outlet of the transfer chamber, which gate is intermittently operated, for example by a pneumatic cylinder, to open and close the outlet of the transfer chamber in coordination with the operation of the pusher.

The mentioned receiving conduit, in which a continuous flow of second granulated product is poured by said vibrating channel, has an inlet arranged to receive the second product from the vibrating channel and an outlet arranged to pour the metered amounts of the second product into the drop conduit. The mentioned retainer comprises a retaining plate pivoting with respect to a horizontal axis and operated by a pneumatic cylinder to open and close said outlet of the receiving conduit in coordination with the operation of the worm screw and of the pusher.

### Brief Description of the Drawings

The foregoing and other features and advantages will be more fully understood from the following detailed description of an embodiment with reference to the attached drawings in which:
Figure 1 is a schematic section view of a mixing-metering device for mixing-metering two morphologically different flowable products according to an embodiment of the present invention in a phase of the metering cycle;
Figure 2 is an illustrative cross section view taken along plane II-II of Figure 1 in a phase of the metering cycle; and
Figure 3 is a schematic section view similar to Figure 1, but in another phase of the metering cycle of the mixing-metering device; and
Figure 4 is an illustrative cross section view similar to Figure 2, but in another phase of the metering cycle of the mixing-metering device.

### Detailed Description of an Embodiment

Making reference generally to the figures, the mixing-metering device for mixing-metering two morphologically different flowable products comprises, according to an embodiment, a first metering device 1 for a first product A, which is for example a powder product, and a second metering device 2 for a second product B, which is for example a granulated product. The mentioned first metering device I includes a metering conduit 5 arranged in a vertical position, which has an inlet 5a at an upper end in communication with a lower outlet of a hopper 13 containing said first product A, and an outlet 5b at a lower end in communication with a vertical outlet conduit 3 aligned with said metering conduit 5. A worm screw 4, which is intermittently operated, for example by an electric motor (not shown), to introduce consecutive metered amounts of said first powder product A into said outlet conduit 3 at a predetermined frequency, is installed inside the metering conduit 5. The outlet conduit is in communication with a filling conduit 22 of a container forming and vertical packaging machine (not shown) provided with means for forming a container around said filling tube 22 from a band of sheet material according to a known technique. Thus, successive containers are formed, filled, sealed and cut in a continuous process.

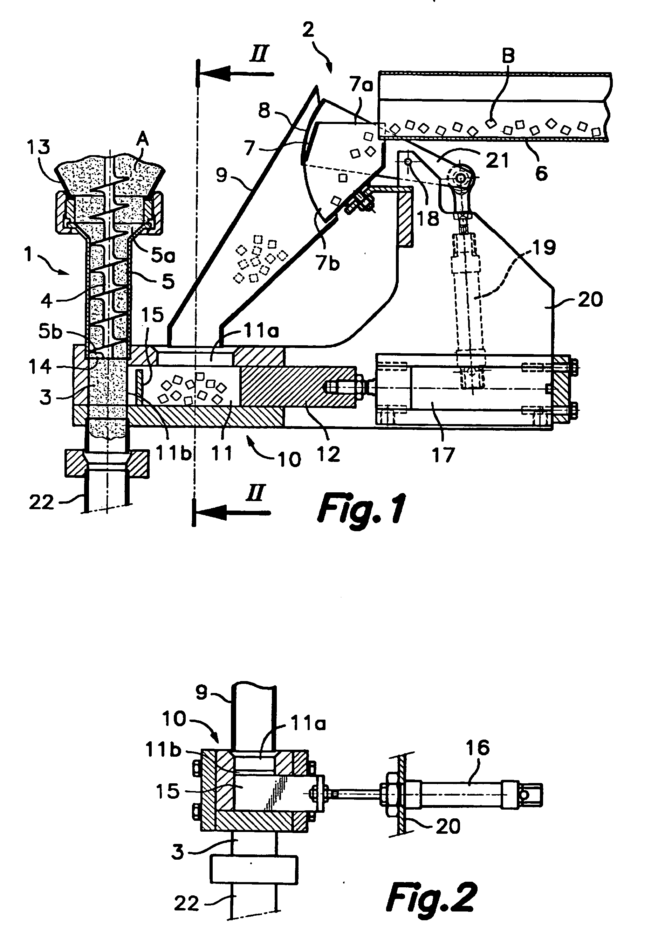

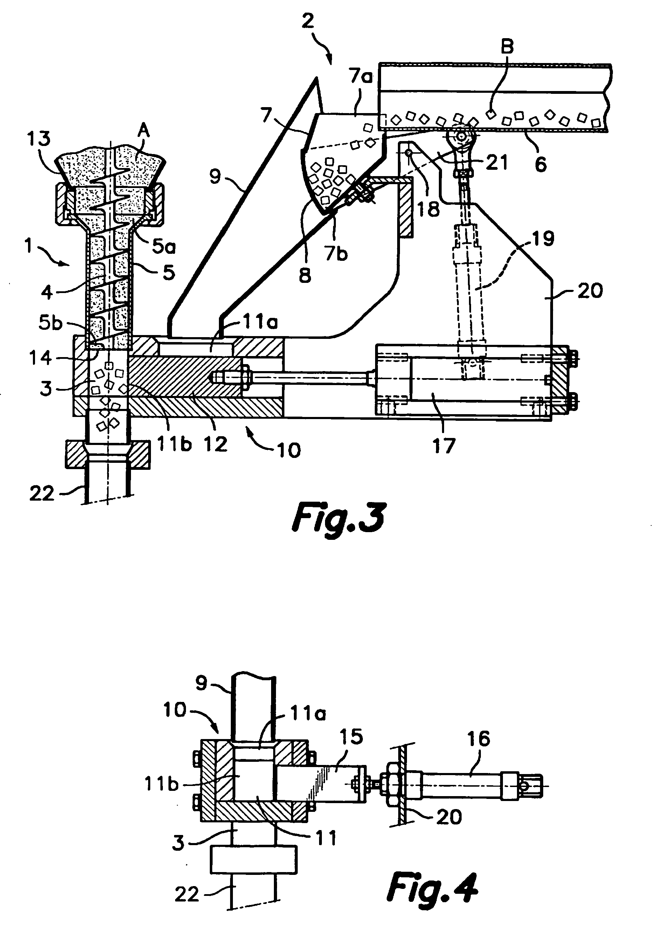

The mentioned second metering device 2 comprises a vibrating channel 6 arranged to continuously convey said second granulated product B and pour it into a receiving conduit 7 at a predetermined flow rate. The mentioned receiving conduit 7 has an inlet 7a arranged to receive the second product B from said vibrating channel 6 and an outlet 7b in connection with an opening of a drop conduit 9. A retainer 8 is arranged and intermittently operated to temporarily retain the flow of the second granulated product B in said receiving conduit 7. The mentioned retainer 8 comprises a retaining plate fixed at an end of an arm 21 which can pivot with respect to a horizontal axis 18 supported in a frame 20. A pneumatic cylinder 19 has a rod connected at an opposite end of the pivoting arm 21 and a body connected to said frame 20, such that a retraction of the pneumatic cylinder 19 moves the retainer to an open position (shown in Figure 1) and an extension of the pneumatic cylinder 19 moves the retainer to a closed position (shown in Figure 3). When the retainer 8 is in the closed position, the second product B accumulates in the receiving conduit 7 until forming a metered amount (Figure 3). Then, the retainer is moved by the pneumatic cylinder 19 to the open position (Figure 1) to let the recently formed metered amount fall into said drop conduit 9. Thus, the pneumatic cylinder 19 is repeatedly retracted and extended to open and close said outlet 7b of the receiving conduit 7 in coordination with the operation of the worm screw 4 at the same predetermined frequency.

A transfer element 10 provided with a transfer chamber 11 which has an upper inlet 11a arranged to receive the metered amounts of the second granulated product B from said drop conduit 9, and an end outlet 11b in communication with the outlet conduit 3 is arranged below the mentioned drop conduit 9. The mentioned transfer chamber 11 is arranged in a horizontal position, and said outlet 11b of the transfer chamber 11 is laterally communicated with the outlet conduit 3 below the outlet 5b of the metering conduit 5. Inside the transfer chamber 11 is arranged a pusher 12 connected to the rod of a pneumatic cylinder 17 the body of which is connected to the frame 20. A retraction of this pneumatic cylinder 17 moves the pusher 12 to a retracted position (shown in Figure 1) in which the transfer chamber 11 is cleared and the upper inlet 11a thereof open, and an extension of the pneumatic cylinder 17 moves the pusher 12 to an extended position (shown in Figure 3) in which the transfer chamber 11 is occupied by the pusher and the upper inlet 11 a is closed by the pusher. During the transition from the retracted position to the extended position, a front surface of the pusher 12 drags the metered amount of the second product B from the transfer chamber 11 to the outlet conduit 3 through said outlet 11b of the transfer chamber 11. Thus, the pneumatic cylinder 17 is repeatedly extended and retracted to transfer successive metered amounts of the second product B into the outlet conduit 3 in coordination with the operation of the worm screw 4 and of the retainer 8 at the same predetermined frequency.

The operations of the worm screw 4, of the retainer 8 and of the pusher 12 can be regulated such that in order to fill a container with a mixture of the first powder product A and of the second granulated product B, the pusher 12 first acts to introduce a metered amount of the second product B and then the worm screw 4 acts to introduce a metered amount of the first product A on the second product B, or vice versa, or even so that they both act to introduce a respective metered amount simultaneously, or in a partially simultaneous manner. The size of the metered amounts of the first powder product A is determined by the regulation of the rotation speed of the worm screw 4 and the duration of the periods during which it rotates. The size of the metered amounts of the second granulated product B is determined by the regulation of the flow rate provided by the vibrating channel 6 and the duration of the periods during which the retainer 8 is in the closed position.

At the outlet 5b of the metering conduit 5 in which the worm screw 4 is installed there is arranged a perforated plate 14 or the like selected to allow the passage of the first product A when the worm screw 4 is being operated and to retain the first product A when the worm screw 4 is stopped. With this perforated plate 14 residual powder discharges from the outlet 5b of the metering conduit 5 into the outlet conduit 3 are prevented from occurring between two metering cycles of the first product A during the periods in which the worm screw 4 is stopped. In a position of the transfer chamber 11 adjacent to the outlet 11b thereof there is arranged a gate 15 intermittently operated to open and close the outlet 11b of the transfer chamber 11 in coordination with the operation of the pusher 12. This gate 15 prevents residual granulate discharges from the outlet 11b of the transfer chamber into the outlet conduit 3 from occurring between two metering cycles of the second product B.

Figures 2 and 4 show the operation of the gate 15. The gate 15 comprises a sliding closure plate, installed such that it can slide in a horizontal direction transverse to the transfer chamber 11. A pneumatic cylinder 16 has a rod connected to the gate 15 and a body connected to the frame 20. Thus, an extension of the pneumatic cylinder 16 moves the gate 15 to a closed position (Figure 2) in which the gate 15 closes the passage through the outlet 11b, and a retraction of the pneumatic cylinder 16 moves the gate 15 to an open position (shown in Figure 4) in which the gate 15 leaves the passage through the outlet 11b clear and does not interfere with the pusher 12 when the latter is moved to the extended position. Obviously, the alternate operation of the pneumatic cylinder 16 to move the gate 15 is regulated in coordination with the movements of the pusher 12, the retainer 8 and the worm screw 4.

In the situation of Figures 1 and 2, the pusher 12 is in the retracted position and the retainer 8 is in the open position to let a metered amount of the second product B fall into the transfer chamber 11. At the same time, the gate 15 is in the closed position and the worm screw 4 is being operated to introduce a metered amount of the first product A into the outlet conduit 3. In the situation of Figure 3 and 4, the retainer 8 is in the closed position to form and retain a metered amount of the second product B in the receiving conduit 7, the gate 15 is in the open position, and the pusher 12 is in the extended position to introduce a metered amount of the second product B into the outlet conduit 3, while the worm screw 4 is stopped.

A person skilled in the art will be able to make modifications and variations from the embodiment shown and described without departing from the scope of the present invention. For example, the receiving conduit 7 and the drop conduit 9 could be integrated in a single conduit and/or the mechanism of the retainer 8 could be different from a pivoting arm; for example a sliding mechanism.

The scope of the present invention is defined in the attached claims.

## Claims

1. A mixing-metering device for two morphologically different flowable products, applicable to a packaging machine, of the type comprising:
a first metering device (1) including a metering conduit (5) with an inlet (5a) at an upper end in communication with a hopper (13) containing a first product (A) and an outlet (5b) at a lower end in communication with an outlet conduit (3) and a worm screw (4) installed inside said metering conduit (5) and intermittently operated to introduce consecutive metered amounts of said first product (A) into said outlet conduit (3) at a predetermined frequency; and
a second metering device (2) to introduce consecutive metered amounts of a second product (B) into said outlet conduit (3) at said predetermined frequency, said second metering device (2) comprising:
a vibrating channel (6) arranged to convey said second product (B) and pour it into a receiving conduit (7) at a predetermined flow rate; and
a retainer (8) intermittently operated to temporarily retain the flow of the second product (B) in said receiving conduit (7) forming successive metered amounts, and to let said metered amounts fall into a drop conduit (9) at the predetermined frequency,
**characterized in that**:
a transfer element (10) is provided having a transfer chamber (11) with an inlet (11a) arranged to receive metered amounts of the second product (B) from said drop conduit (9), an outlet (11b) in communication with the outlet conduit (3) and a pusher (12) intermittently operated to transfer the metered amounts of the second product (B) from said transfer chamber (11) to the outlet conduit (3) through said outlet (11b) at the predetermined frequency, wherein the outlet conduit (3) and the metering conduit (5) in which said worm screw is installed (4) are arranged in a vertical position and mutually aligned, the outlet conduit (3) is in communication with a filling conduit (22) of a vertical container forming and packaging machine, the transfer chamber (11) in which said pusher moves (12) is arranged in a horizontal position, and the outlet (11b) of the transfer chamber (11) is laterally communicated with the outlet conduit (3) below the outlet (5b) of the metering conduit (5).

2. The mixing-metering device according to claim 1, **characterized in that** a perforated plate (14) is arranged at said outlet (5b) of the metering conduit (5) to allow the passage of the first product (A) when the worm screw (4) is being operated and to retain the first product (A) when the worm screw (4) is stopped.

3. The mixing-metering device according to claim 1, **characterized in that** a gate (15) intermittently operated is arranged to open and close said outlet (11b) of the transfer chamber (11) in coordination with the operation of the pusher (12).

4. The mixing-metering device according to claim 3, **characterized in that** said gate (15) comprises a sliding closure plate which slides in a direction transverse to the transfer chamber (11) and operated by a pneumatic cylinder (16).

5. The mixing-metering device according to claim 1, **characterized in that** the pusher (12) is operated by a pneumatic cylinder (17).

6. The mixing-metering device according to claim 1, **characterized in that** said receiving conduit (7) has an inlet (7a) arranged to receive the second product (B) from said vibrating channel (6) and an outlet (7b) arranged to pour the metered amounts of the second product (B) into the drop conduit (9).

7. The mixing-metering device according to claim 6, **characterized in that** said retainer (8) comprises a retaining plate pivoting with respect to a horizontal axis (18) and operated by a pneumatic cylinder (19) to open and close said outlet (7b) of the receiving conduit (7) in coordination with the operation of the worm screw (4) and of the pusher (12).

8. The mixing-metering device according to any one of the previous claims, **characterized in that** said first metering device (1) is configured to meter a first powder product (A) and said second metering device (2) is configured to meter a second granulated product (B).

## Patentansprüche

1. Misch-Dosierungsvorrichtung für zwei morphologisch verschiedene, fließfähige Produkte, welche auf eine Verpackungsmaschine anwendbar ist, der Art umfassend:
eine erste Dosierungsvorrichtung (1), welche ein Dosierungsrohr (5) mit einem Eintritt (5a) an einem oberen Ende in Verbindung mit einem Trichter (13) aufweist, welcher ein erstes Produkt (A) enthält und einem Austritt (5b) an einem unteren Ende in Verbindung mit einem Austrittsrohr (3) und einer Schneckenschraube (4), welche in dem genannten Dosierungsrohr (5) angebracht ist und intermittierend betätigt wird, um aufeinanderfolgende dosierte Mengen von dem genannten ersten Produkt (A) in das genannte Austrittsrohr (3) mit einer vorbestimmten Frequenz einzuführen; und
eine zweite Dosierungsvorrichtung (2), um aufeinanderfolgende dosierte Mengen von einem zweiten Produkt (B) in das genannte Austrittsrohr (3) mit der genannten vorbestimmten Frequenz einzuführen, wobei die genannte zweite Dosierungsvorrichtung (2) Folgendes umfasst:
einen Vibrationskanal (6), welcher dazu angeordnet ist, das genannte zweite Produkt (B) zu fördern und dieses in ein Aufnahmerohr (7) mit einem vorbestimmten Durchfluss zu gießen; und
einen Halter (8), welcher intermittierend betätigt wird, um vorübergehend den Fluss des zweiten Produkts (B) in dem genannten Aufnahmerohr (7) zurückzuhalten, unter Bildung von aufeinanderfolgenden dosierten Mengen, und
um zu ermöglichen, dass die genannten dosierten Mengen in ein Fallrohr (9) mit der vorbestimmten Frequenz fallen,
**dadurch gekennzeichnet, dass**:
ein Übergabeelement (10) vorgesehen ist, welches eine Übergabekammer (11) mit einem Eintritt (11a), welcher dazu angeordnet ist, dosierte Mengen von dem zweiten Produkt (B) von dem genannten Fallrohr (9) aus aufzunehmen, einen Austritt (11b) in Verbindung mit dem Austrittsrohr (3) und einen Stößel (12), welcher intermittierend betätigt wird, um die dosierten Mengen von dem zweiten Produkt (B) von der genannten Übergabekammer (11) aus zum Austrittsrohr (3) durch den genannten Austritt (11b) mit der vorbestimmten Frequenz zu übergeben, aufweist, wobei das Austrittsrohr (3) und das Dosierungsrohr (5), in welchem die genannte Schneckenschraube (4) angebracht ist, in einer vertikalen Stellung und aufeinander ausgerichtet angeordnet sind, das Austrittsrohr (3) in Verbindung mit einem Füllrohr (22) einer vertikalen Form- und Verpackungsmaschine für Behälter ist, die Übergabekammer (11), in welche sich der genannte Stößel (12) bewegt in einer horizontalen Stellung angeordnet ist, und der Austritt (11 b) der Übergabekammer (11) seitlich in Verbindung mit dem Austrittsrohr (3) unter dem Austritt (5b) des Dosierungsrohrs (5) ist.

2. Misch-Dosierungsvorrichtung nach Anspruch 1, **dadurch gekennzeichnet, dass** eine perforierte Platte (14) in dem genannten Austritt (5b) des Dosierungsrohrs (5) angeordnet ist, um den Durchgang des ersten Produkts (A) zu ermöglichen, wenn die Schneckenschraube (4) betätigt wird und um das erste Produkt (A) zurückzuhalten, wenn die Schneckenschraube (4) angehalten wird.

3. Misch-Dosierungsvorrichtung nach Anspruch 1, **dadurch gekennzeichnet, dass** eine intermittierend betätigte Tür (15) angeordnet ist, um den genannten Austritt (11b) der Übergabekammer (11) in Abstimmung mit dem Betrieb des Stößels (12) aufzuschließen und zu verschließen.

4. Misch-Dosierungsvorrichtung nach Anspruch 3, **dadurch gekennzeichnet, dass** die genannte Tür (15) eine verschiebbare Verschlussplatte umfasst, welche sich in eine zur Übergabekammer (11) transversalen Richtung verschiebt, und von einem Pneumatikzylinder (16) betätigt wird.

5. Misch-Dosierungsvorrichtung nach Anspruch 1, **dadurch gekennzeichnet, dass** der Stößel (12) von einem Pneumatikzylinder (17) betätigt wird.

6. Misch-Dosierungsvorrichtung nach Anspruch 1, **dadurch gekennzeichnet, dass** das genannte Aufnahmerohr (7) einen Eintritt (7a) aufweist, welcher dazu angeordnet ist, das zweite Produkt (b) von dem genannten Vibrationskanal (6) aufzunehmen und einen Austritt (7b) aufweist, welcher dazu angeordnet ist, die dosierten Mengen des zweiten Produkts (B) in das genannte Fallrohr (9) zu gießen.

7. Misch-Dosierungsvorrichtung nach Anspruch 6, **dadurch gekennzeichnet, dass** der genannte Halter (8) eine Halteplatte umfasst, welche in Bezug auf eine horizontale Achse (18) schwenkt, und von einem Pneumatikzylinder (19) betätigt wird, um den genannten Austritt (7b) des Aufnahmerohrs (7) in Abstimmung mit dem Betrieb der Schneckenschraube (4) und des Stößels (12) aufzuschließen und zu verschließen.

8. Misch-Dosierungsvorrichtung nach einem der vorangehenden Ansprüche, **dadurch gekennzeichnet, dass** die genannte erste Dosierungsvorrichtung (1) dazu ausgebildet ist, ein erstes Pulverprodukt (A) zu dosieren und dass die genannte zweite Dosierungsvorrichtung (2) dazu ausgebildet ist, ein zweites Granulatprodukt (B) zu dosieren.

## Revendications

1. Un dispositif mélangeur-doseur pour deux produits fluides morphologiquement différents applicable à une machine d'emballage du genre comportant:
un premier dispositif doseur (1) comprenant un conduit doseur (5) ayant une entrée (5a) à une extrémité supérieure en communication avec une trémie (13) contenant un premier produit (A) et une sortie (5b) à une extrémité inférieure en communication avec un conduit de sortie (3) et une vis sans fin (4) installée à l'intérieur de ce conduit doseur (5) et actionné de façon intermittente pour introduire des quantités dosées consécutives de ce premier produit (A) dans ce conduit de sortie (3) à une fréquence prédéterminée; et
un deuxième dispositif doseur (2) pour introduire des quantités dosées consécutives d'un deuxième produit (B) dans ce conduit de sortie (3) à cette fréquence prédéterminée, ce deuxième dispositif doseur (2) comportant:
un canal vibrateur (6) aménagé pour acheminer ce deuxième produit (B) et le verser dans un conduit collecteur (7) à un débit prédéterminé; et
un bassin (8) actionné de façon intermittente pour retenir provisoirement le débit du deuxième produit (B) dans ce conduit collecteur (7) formant des quantités dosées successives et pour laisser que ces quantités dosées tombent dans un conduit de chute (9) à la fréquence prédéterminée,
**caractérisée en ce que**:
un élément de transfert (10) est prévu ayant une chambre de transfert (11 ) avec une entrée (11a) aménagée pour recevoir les quantité dosées du deuxième produit (B) depuis ce conduit de chute (9), une sortie (11 b) en communication avec le conduit de sortie (3) et un poussoir (12) et actionné de façon intermittente pour transférer les quantités dosées du deuxième produit (B) depuis cette chambre de transfert (11) au conduit de sortie (3) à travers cette sortie (11 b) à la fréquence prédéterminée où le conduit de sortie (3) et le conduit doseur (5) dans lequel cette vis sans fin est installée (4) sont aménagés en position verticale et alignés entre eux, le conduit de sortie (3) est en communication avec un conduit de remplissage (22) d'une machine de formation à récipient vertical , la chambre de transfert (11) dans laquelle ce poussoir (12) se déplace est aménagé en position horizontale et la sortie (11 b) de la chambre de transfert (11) est communiqué latéralement au conduit de sortie (3) au-dessous de la sortie (5b) du conduit doseur (5).

2. Le dispositif mélangeur doseur conformément à la revendication 1, **caractérisé en ce qu'**une planche perforée (14) est aménagée à cette sortie (5b) du conduit doseur (5) pour permettre le passage du premier produit (A) lorsque la vis sans fin (4) est actionnée et retient le premier produit (A) lorsque la vis sans fin (4) est arrêtée.

3. Le dispositif mélangeur doseur conformément à la revendication 1, **caractérisé en ce qu'**une vanne (15) actionnée de façon intermittente est aménagée pour ouvrir et fermer cette sortie (11 b) de la chambre de transfert (11) en coordination avec le fonctionnement du poussoir (12).

4. Le dispositif mélangeur doseur conformément à la revendication 3, **caractérisé en ce que** cette vanne (15) comporte une planche de fermeture coulissante qui glisse en direction transversale à la chambre de transfert (11) et actionnée par un cylindre pneumatique (16).

5. Le dispositif mélangeur doseur conformément à la revendication 1 **caractérisé en ce que** le poussoir (12) est actionné par un cylindre pneumatique (17).

6. Le dispositif mélangeur doseur conformément à la revendication 1, **caractérisé en ce que** ce conduit collecteur (7) possède une entrée (7a) aménagée pour recevoir le deuxième produit (B) de ce canal vibrateur (6) et une sortie (7b) aménagée pour verser les quantités dosées du deuxième produit (B) dans le conduit de chute (9).

7. Le dispositif mélangeur doseur conformément à la revendication 6, **caractérisé en ce que** ce bassin (8) comporte une planche de rétention pivotante par rapport à un axe horizontal (18) et actionnée par un cylindre pneumatique (19) pour ouvrir et fermer cette sortie (7b) du conduit collecteur (7) en coordination avec le fonctionnement de la vis sans fin (4) et le poussoir (12).

8. Le dispositif mélangeur doseur conformément à une quelconque des revendications précédentes, **caractérisé en ce que** ce premier dispositif doseur (1) est configuré pour doser un premier produit en poudre (A) et ce deuxième dispositif doseur (2) est configuré pour doser un deuxième produit granulé (B).
